# EUROPÄISCHE PATENTSCHRIFT

(11) **EP 1 228 854 B1**
(45) Veröffentlichungstag und Bekanntmachung des Hinweises auf die Patenterteilung: **15.03.2006**
(21) Anmeldenummer: 02001011.2
(22) Anmeldetag: 17.01.2002
(51) Int. Cl.: B29D 30/54, B29D 30/30

(54) **Belegevorrichtung zur Zuführung von Laufstreifen auf Reifenkarkassen**
Apparatus for applying a tread band to a tyre carcass
Dispositif pour l'application de la bande de roulement à la carcasse d'un pneu

(30) Priorität: 02.02.2001 DE 10104774
(43) Veröffentlichungstag der Anmeldung: 07.08.2002
(73) Patentinhaber: VMI - AZ Extrusion GmbH, 93486 Runding (DE)
(72) Erfinder: Fischer, Florian, 85560 Ebersberg (DE)
(74) Vertreter: Baronetzky, Klaus

(56) Entgegenhaltungen:
- EP-A- 0 384 083
- EP-A- 0 454 094
- GB-A- 1 421 679
- US-A- 4 769 104
- US-A- 5 248 374
- PATENT ABSTRACTS OF JAPAN vol. 1997, no. 03, 31. März 1997 (1997-03-31) & JP 08 300511 A (YOKOHAMA RUBBER CO LTD:THE), 19. November 1996 (1996-11-19)

## Beschreibung

Die Erfindung betrifft eine Belegevorrichtung, gemäß dem Oberbegriff von Anspruch 1.

Belegevorrichtungen für die Zuführung von Laufstreifen auf Karkassen weisen üblicherweise eine Schneidevorrichtung für den Laufstreifen auf. Mit der Schneidevorrichtung wird festgelegt, welche Länge der Laufstreifen haben soll, und der Laufstreifen wird dann während der Drehung der Karkasse auf diese aufgebracht.

Man ist bestrebt, die Länge des Laufstreifens im vorhinein möglichst genau festzulegen. Zum einen ist es wichtig, dass der Laufstreifen nicht zu kurz ist, da ansonsten eine Unstetigkeitsstelle beim Stoß auf der Karkasse verbleibt. Ein Überstand muss manuell mittels eines Schneidemessers entfernt werden. Auch hier besteht regelmäßig die Gefahr, dass die Qualität des zu erzeugenden Reifens verschlechtert ist, etwa wenn der Bediener nicht präzise arbeitet.

Für die Nacharbeit braucht der Bediener Platz neben der Karkasse. Nachdem der Bindegummi-Extruder auf der der Laufstreifen-Zuführvorrichtung gegenüberliegenden Seite mit hohem Druck auf die Karkasse wirkt, ist es wünschenswert, die dort vorgesehene Lagerung nicht noch um eine Horizontalverschiebung zu ergänzen, die die Konstruktion aufwendiger machen würde.

Daher ist es vorgeschlagen worden, die Laufstreifen-Zuführvorrichtung von der Karkasse entfernbar zu lagern. Bei einer derartigen Lösung wird bislang der Laufstreifen in etwa zentral der Karkasse zugeführt, dann nach oben abgebogen und dann in Gegenrichtung gebogen auf die Karkasse aufgelegt. Diese Lösung ist jedoch nachteilig, denn durch das Krümmen des Laufstreifens längt sich dieser, wobei die Längung sich nach einer gewissen Zeit allmählich vermindert.

Ferner ist es aus der US-A-5,248,374, der US-A-4,769,104 und aus Patent Abstracts of Japan gemäß der JP 08/300511 bekannt geworden, den Laufstreifen dem unteren Ende der Karkasse zuzuführen. Nachdem nur wenige Zentimeter zwischen der Karkassenunterseite und dem Laufstreifen verbleiben, ist das dortige Anlegen ergonomisch ausgesprochen ungünstig, gerade bei großen Karkassen. Ferner ist auch die Bedienung der Schneidvorrichtung praktisch nur möglich, wenn der Bediener sich bückt. Darüber hinaus muss bei dieser Lösung aber der Extruder gegenüber der Karkasse translatorisch verschiebbar gelagert sein, was zum einen die Konstruktion aufwendiger macht und zum anderen eine entsprechend reduzierte Präzision bei der Zuführung des Bindegummis bewirkt.

Aus der GB-PS 1,421,679 ist eine Meßvorrichtung für unvulkanisierte Laufstreifen bekannt geworden, bei der Laufstreifen gemessen und zugeführt werden sollen. Diese Lösung ist für Handhabung ausgesprochen ungünstig, wenn großen Karkassen eingesetzt worden, denn der Bediener müsste beispielsweise auf einem 2 m hohem Gestell stehen, um die Belegearbeiten durchzuführen. Aus der EP-A2 454 094 ist eine weitere Belegevorrichtung bekannt, die auf die Geschwindigkeitskompensation des Laufstreifens abstellt. Schließlich ist aus der EP-A2 384 083 eine Belegevorrichtung bekannt, bei der offenbar recht kleine Karkassen mit einem Laufstreifen belegbar sind.

Zur Verbesserung der Präzision bei der Laufstreifen-Zuführung ist es in der nicht vorveröffentlichten deutschen Patentanmeldung gemäß der DE-A1-100 38 471.4 vorgeschlagen worden, den Laufstreifen zu spannen. Diese Lösung setzt jedoch eine starre Anbringung der Zuführbahn voraus.

Ferner ist es vorgeschlagen worden, die Länge des Laufstreifens über eine Längenmessvorrichtung zu messen und basierend auf Erfahrungswerten, aufgrund derer eine Tabelle für unterschiedliche Laufstreifenlängen bei unterschiedlichen Karkassendurchmessern festgelegt wird, die Schneidevorrichtung zu betätigen.

Demgegenüber liegt der Erfindung die Aufgabe zugrunde, eine Belegvorrichtung gemäß dem Oberbegriff von Anspruch 1 zu schaffen, die eine verbesserte Präzision bei der Bereitstellung des Laufstreifens ermöglicht, wobei zugleich die Nachbearbeitung des Stoßes vereinfacht werden soll.

Diese Aufgabe wird erfindungsgemäß durch Anspruch 1 gelöst. Vorteilhafte Weiterbildungen ergeben sich aus den Unteransprüchen.

Die erfindungsgemäße Lösung bietet überraschend eine erhöhte Präzision bei der Herstellung eines auf die Karkasse aufgebrachten Laufstreifens. Erfindungsgemäß wird der Laufstreifen gerade zugeführt, im Gegensatz zu den gekrümmten Zuführungen gemäß dem Stand der Technik. Durch die bislang eingesetzte Biegung des Laufstreifens zur Zuführung wurde der Laufstreifen offenbar gelängt, und zwar auch dann, wenn er wieder gerade gerichtet oder in die Gegenrichtung entsprechend der Krümmung der Karkasse gebogen wird. Erfindungsgemäß können die Tabellen, die die Längung kompensieren sollen, entfallen. Zudem ist auch keine Berücksichtigung der Zeitdauer der Zuführung wichtig, denn die Rückstellwirkung der verwendeten Massen, die die Längung nach einer gewissen Zeit kompensierte, ist erfindungsgemäß entfallen, nachdem keine Längung während der Laufstreifenzuführung vorgesehen ist.

Erfindungsgemäß wird vielmehr die Stützbahn für den Laufstreifen in ihrer Gesamtheit unter Beibehaltung der geraden Erstreckung des Laufstreifens in eine Zuführposition verschwenkt und verfahren. Dies bedingt zum einen eine Schwenkbewegung um ein Gelenk und zum anderen eine translatorische Bewegung der Stützbahn, die je in beliebiger geeigneter Weise realisiert werden können. Bevorzugt ist es vorgesehen, ein Gelenk von der Karkasse deutlich beabstandet, also fast am entgegengesetzten Ende der Stützbahn vorzusehen. Bei dieser Lösung ist der erforderliche Schwenkwinkel gering. Die translatorische, also im wesentlichen horizontale Bewegung der Stützbahn kann auf einer geeigneten Führungsschiene vorgesehen sein. Eine derartige Führungsschiene lässt sich vergleichsweise kostengünstig realisieren, zumal die Lagerkräfte beschränkt sind und insbesondere deutlich geringer als die Extrusionskräfte, die von der Lagervorrichtung für die Karkasse, dem Karkassenhalter, aufgenommen werden müssen.

Erfindungsgemäß besonders günstig ist es, dass eine Anpassung an unterschiedliche Karkassendurchmesser ohne weiteres vorgenommen werden kann. Die Zuführposition, also die zur Karkassenoberfläche tangentiale Position des Laufstreifens, lässt sich beliebig einstellen, und zwar entweder manuell oder über eine automatische Steuerung.

Besonders günstig ist es ferner, dass durch die horizontale Verfahrbarkeit der Stützbahn der Bereich vor der Karkasse ohne weiteres freigegeben werden kann. Hierdurch kann die Bedienperson in ergonomisch günstiger Weise die Stoßbearbeitung vornehmen, was der Qualität der Reifenherstellung zugute kommt.

Auch die Schneidevorrichtung ist bei der erfindungsgemäßen Lösung bevorzugt stets etwa in Arbeitshöhe wie beispielsweise dem Bereich 1 m bis 1,20 m. Hierdurch ist sichergestellt, dass die Bedienperson den Schnitt präzise durch führen kann.

Weitere Einzelheiten, Vorteile und Merkmale ergeben sich aus der nachstehenden Beschreibung eines Ausführungsbeispiels anhand der Zeichnung.

Es zeigen:
- Fig. 1: eine perspektivische Darstellung eines Ausführungsbeispiels einer erfindungsgemäßen Belegevorrichtung;
- Fig. 2: die Belegevorrichtung gemäß Fig. 1 in einer ersten Zuführposition; und
- Fig. 3: die Belegevorrichtung gemäß Fig. 1 in einer zweiten Zuführposition.

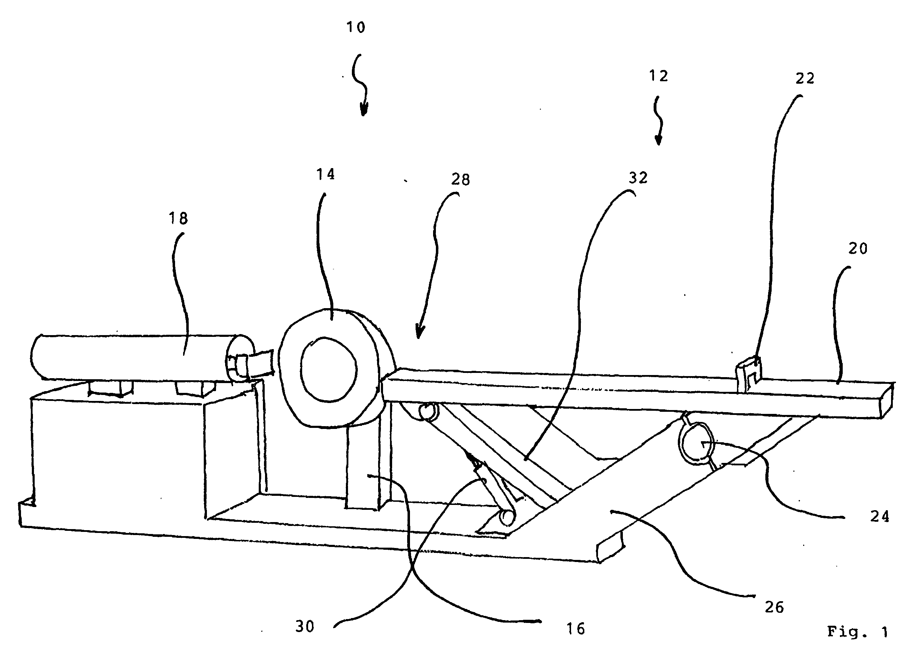

Die in Fig. 1 dargestellte Belegevorrichtung 10 weist eine Laufstreifen-Zuführvorrichtung 12 auf, über welche ein nicht dargestellter Laufstreifen einer abgeschälten Karkasse 14 zugeführt werden kann. Die Karkasse 14 ist auf einem Karkassenhalter 16 drehbar gelagert. Vor dem Zuführen des Laufstreifens wird über einen Bindegummi-Extruder 18 die vorbereitete Karkasse mit einer Bindegummi-Schicht nach der CTC-(= Cushion-To-Casing)-Technik beschichtet.

Die Laufstreifen-Zuführvorrichtung 12 weist eine auf einer nicht ersichtlichen Führungsschiene geführte Stützbahn 20 auf. Die Stützbahn 20 ist zur Karkasse 14 hin und von dieser weg verschiebbar und weist auf ihrer Oberseite in an sich bekannter weise nicht dargestellte Rollen auf, auf welchen der Laufstreifen reibungsarm bewegt werden kann. Ferner trägt die Stützbahn 20 eine Schneidevorrichtung 22, die in Fig. 1 schematisch dargestellt ist und mit der der Laufstreifen auf die erwünschte Länge zugeschnitten werden kann.

Die Stützbahn 20 ist zusammen mit ihrer Führungsschiene schwenkbar gelagert. Hierzu ist ein Gelenk 24 vorgesehen, das ein Verschwenken gegenüber einem Rahmen 26 der Belegevorrichtung 10 ermöglicht. Beim Verschwenken wird ein Ende 28 der Stützbahn 20, das der Karkasse 14 benachbart ist, angehoben. Hierzu dient ein Arbeitszylinder 30, der auf einen Stützschenkel 32 wirkt, der Teil der Führungsschiene ist.

Ferner weist die Stützbahn 20 einen nicht dargestellten Horizontalantrieb auf, über welchen sie gegenüber dem Stützschenkel 32 und auch gegenüber dem Gelenk 24 im wesentlichen horizontal verfahrbar ist. Damit ist sowohl die Schwenklage als auch die horizontale Lage der Stützbahn 20 nach Belieben einstellbar.

In dem in Fig. 1 dargestellten Zustand ist die Stützbahn 20 in der Vorbereitungsposition. In dieser Position kann der Laufstreifen vorbearbeitet werden, beispielsweise über die Schneidevorrichtung 22 auf die erwünschte Länge abgeschnitten werden.

Sobald die Vorbereitung abgeschlossen ist, lässt sich die Stützbahn 20 in eine Zuführposition verstellen. Hierzu wird über den Horizontalantrieb zunächst das Ende 28 zur Karkasse 14 hin verfahren. Am Ende 28 ist ein Sensor angebracht, der die Annäherung an die Karkassenoberfläche erfasst. Nachdem der Karkassenhalter in der in Fig. 1 dargestellten Position nicht horizontal verfahrbar ist, ergibt sich hieraus der Karkassendurchmesser. Über den Arbeitszylinder 30 wird dann die Stützbahn 20 angehoben und in die Zuführposition gebracht. Hierzu wird sowohl das Schwenken um das Gelenk 24 als auch die Horizontalverlagerung basierend auf dem Karkassendurchmesser festgelegt, so dass sich genau die erwünschte Zuführposition ergibt, in welcher sich der Laufstreifen tangential zur Karkassenoberfläche erstreckt.

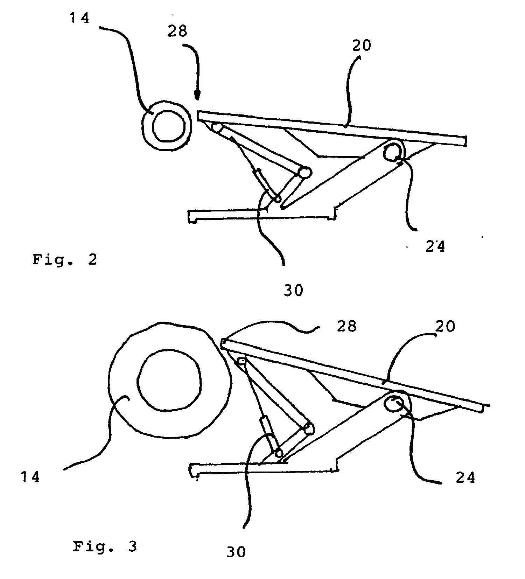

Entsprechende Zuführpositionen sind aus Fig. 2 und 3 ersichtlich, wobei Fig. 2 eine Karkasse mit einem kleineren Durchmesser und Fig. 3 eine Karkasse mit einem größeren Durchmesser zeigt.

## Patentansprüche

1. Belegevorrichtung (10), mit Schneidevorrichtung (22), mit einem Karkassenhalter, auf welchem eine Karkasse (14) drehbar gelagert ist, wobei von dem Karkassenhalter (16) Karkassen (14) unterschiedlichen Karkassendurchmessers lagerbar sind, und mit einer Laufstreifen-Zuführvorrichtung (12), mit welcher der Karkasse (14) ein Laufstreifen zuführbar ist, wobei die Laufstreifen-Zuführvorrichtung (12) eine gerade Stützbahn (20) aufweist, die sich von der Schneidevorrichtung (22) zu dem der Karkasse (14) zugewandten Ende (28) der Laufstreifen-Zuführvorrichtung (12) erstreckt, **dadurch gekennzeichnet, dass** die Stützbahn (20) in Abhängigkeit vom Karkassendurchmesser von einer Hebevorrichtung in eine Zuführposition anhebbar ist, in welcher der Laufstreifen der Karkasse (14) oben tangential zuführbar ist.

2. Belegevorrichtung nach Anspruch 1, **dadurch gekennzeichnet, dass** die Hebevorrichtung als Arbeitszylinder (30) ausgebildet ist.

3. Belegevorrichtung nach Anspruch 1, **dadurch gekennzeichnet, dass** ein Gelenk (24) der Laufstreifen-Zuführvorrichtung (12) unter der Stützbahn (20) und insbesondere im Bereich unterhalb einer Schneidevorrichtung (22) angeordnet ist.

4. Belegevorrichtung nach einem der vorhergehenden Ansprüche, **dadurch gekennzeichnet, dass** die Stützbahn (20) schwenkbar gelagert und zur Karkasse (14) hin und von der Karkasse (14) weg bewegbar ist.

5. Belegevorrichtung nach einem der vorhergehenden Ansprüche, **dadurch gekennzeichnet, dass** an dem karkassenseitigen Ende (28) der Stützbahn (20) ein Sensor angeordnet ist, mit welchem eine Annäherung der Stützbahn (20) an die Karkasse (14) erfassbar ist.

6. Belegevorrichtung nach einem der vorhergehenden Ansprüche, **dadurch gekennzeichnet, dass** die Stützbahn (20) sich in der Vorbereitungsposition horizontal erstreckt.

7. Belegevorrichtung nach einem der vorhergehenden Ansprüche, **dadurch gekennzeichnet, dass** die Stützbahn (20) mindestens 20 cm, bevorzugt etwa 40 cm von der Karkasse (14) entfernbar ist.

8. Belegevorrichtung nach einem der vorhergehenden Ansprüche, **dadurch gekennzeichnet, dass** die Stützbahn (20) in an sich bekannter Weise Rollen aufweist, die so eng benachbart angeordnet sind, dass der Laufstreifen zwischen ihnen nicht merklich durchhängt.

9. Belegevorrichtung nach einem der vorhergehenden Ansprüche, **dadurch gekennzeichnet, dass** die Stützbahn (20) mit einer Hebevorrichtung in die Zuführposition anhebbar ist und insbesondere das Maβ des Anhebens durch den den Karkassendurchmesser erfassenden Sensor festgelegt ist.

10. Belegevorrichtung nach Anspruch 9, **dadurch gekennzeichnet, dass** die Hebevorrichtung einen Hydraulik-Arbeitszylinder aufweist und das Maß des Anhebens durch den den Karkassendurchmesser erfassenden Sensor festgelegt ist.

## Revendications

1. Dispositif d'application de bande de roulement (10), ayant un dispositif de découpage (22), ayant un support de carcasse sur lequel une carcasse (14) soit montée de manière orientable, où des carcasses (14) de diamètre de carcasse différents sont logeables sur le support de carcasse (16), et ayant un dispositif d'alimentation de bande de roulement (12), avec lequel une bande de roulement puisse être alimentée à la carcasse (14), où le dispositif d'alimentation de bande de roulement (12) présente un cours de support droit (20), qui s'étend du dispositif de découpage (22) à l'extrémité (28) du dispositif d'alimentation de bande de roulement (12) tourné vers la carcasse (14), **caractérisé en ce que** le cours de support (20) puisse être levé en fonction du diamètre de carcasse par un dispositif de levage dans une position d'alimentation, dans laquelle la bande de roulement de la carcasse (14) puisse être alimenté tangentiellement par le haut.

2. Dispositif d'application de bande de roulement, selon la revendication 1, **caractérisé en ce que** le dispositif de levage soit configuré comme cylindre de travail (30).

3. Dispositif d'application de bande de roulement selon la revendication 1, **caractérisé en ce qu'**une articulation (24) du dispositif d'alimentation de bande de roulement (12) soit arrangé sous le cours de support (20) et de préférence dans le secteur sous un dispositif de découpage (22) .

4. Dispositif d'application de bande de roulement, selon la revendication 1, **caractérisé en ce que** le cours de support (20) soit monté inclinable et déplaçable vers la carcasse (14) et depuis la carcasse (14).

5. Dispositif d'application de bande de roulement selon la revendication 1, **caractérisé en ce qu'**une sonde soit disposée àà la fin (28) du cours de support (20) près de la carcasse, avec lequel une approximation du cours de support (20) à la carcasse (14) puisse être détectée.

6. Dispositif d'application de bande de roulement, selon la revendication 1, **caractérisé en ce que** le cours de support (20) se prolonge horizontalement en position de préparation.

7. Dispositif d'application de bande de roulement, selon la revendication 1, **caractérisé en ce que** le cours de support (20) puisse être levé au moins 20 centimètres, de préférence environ 40 centimètres, de la carcasse (14).

8. Dispositif d'application de bande de roulement selon la revendication 1, **caractérisé en ce que** le cours de support (20) présente des rouleaux, connus dans l'art, qui sont disposés contigués si rapprochés que la bande de roulement ne fléchit pas sensiblement entre eux.

9. Dispositif d'application de bande de roulement selon la revendication 1, **caractérisé en ce que** le cours de support (20) puisse être levé dans la position d'alimentation à l'aide d'un dispositif de levage et notamment la mesure de l'altitude est déterminée par la sonde saisissant le diamètre de carcasse.

10. Dispositif d'application de bande de roulement selon la revendication 9, **caractérisé en ce que** le dispositif de levage comporte un cylindre de travail hydraulique et que la mesure de l'élévation soit déterminé par la sonde qui saisit le diamètre de carcasse.

## Claims

1. Tread applicator device (10), with cutting device (22), with a carcass holder on which a carcass (14) is mounted rotatably, where carcasses (14) of different carcass diameter can be mounted on the carcass holder (16), and with a tread feeding device (12), with which a tread can be fed to the carcass (14), where the tread feeding device (12) comprises a straight supporting course (20), which extends from the cutting device (22) to the end (28) of the tread feeding device (12) turned towards the carcass (14), **characterized in that that** the supporting course (20) can be raised depending on the carcass diameter by a lifting device into a feed position, in which the tread of the carcass (14) can be fed tangentially above.

2. Tread applicator device according to claim 1, **characterized in that** the lifting device is configured as a working cylinder (30).

3. Tread applicator device according to claim 1, **characterized in that** a joint (24) of the tread feeding device (12) is arranged under the supporting course (20) and preferably in the area below a cutting device (22).

4. Tread applicator device according to claim 1, **characterized in that** the supporting course (20) is mounted able to be tilted and moved towards the carcass (14) and away from the carcass (14).

5. Tread applicator device according to claim 1, **characterized in that** a sensor is arranged at the end (28) of the supporting course (20) next to the carcass, with which an approximation of the supporting course (20) to the carcass (14) can be detected.

6. Tread applicator device according to claim 1, **characterized in that** the supporting course (20) extends horizontally in the preparation position.

7. Tread applicator device according to claim 1, **characterized in that** the supporting course (20) can be removed at least 20 cm, preferably about 40 cm, from the carcass (14).

8. Tread applicator device according to claim 1, **characterized in that** the supporting course (20) comprises rolls, known in the art, which are arranged contiguously so close together that the tread does not sag noticeably between them.

9. Tread applicator device according to claim 1, **characterized in that** the supporting course (20) can be raised into the feed position with a lifting device and in particular the measurement of the elevation is determined by the sensor capturing the carcass diameter.

10. Tread applicator device according to claim 9, **characterized in that** the lifting device comprises a hydraulic working cylinder and the measure of the elevation is determined by the sensor capturing the carcass diameter.
